# FASCICULE DE BREVET EUROPEEN

(11) **EP 3 983 821 B1**
(45) Date de publication et mention de la délivrance du brevet: **28.06.2023**
(21) Numéro de dépôt: 20723431.1
(22) Date de dépôt: 11.05.2020
(51) Int. Cl.: G01S 7/521, G10K 11/00

(54) **SONAR TREMPÉ À FAIBLE TRAINÉE**
TAUCHSONAR MIT NIEDRIGEM WIDERSTAND
LOW DRAG DIPPING SONAR

(30) Priorité: 13.06.2019 FR 1906286
(43) Date de publication de la demande: 20.04.2022
(73) Titulaire: THALES, 92400 Courbevoie (FR)
(72) Inventeur: THOMAS, Philippe, 29238 Brest (FR); WARNAN, François, 29238 Brest (FR)
(74) Mandataire: Atout PI Laplace
(86) Numéro de dépôt international: PCT/EP2020/062986
(87) Numéro de publication internationale: WO 2020/249334

(56) Documents cités:
- EP-A1- 0 365 408
- JP-A- H04 332 894
- US-A- 3 237 151
- US-B1- 6 233 202

## Description

La présente invention concerne le domaine général de la détection sonar notamment mise en oeuvre dans la lutte anti sous-marine. Elle concerne plus particulièrement le domaine des sonars aéroportés dits "sonars trempés" ou « dipping sonar » dans la littérature anglo-saxonne mis en oeuvre depuis un hélicoptère ou un drone.

Dans le cadre d'activités de lutte anti sous-marine, pour pouvoir détecter des sous-marins en immersion dans une zone donnée, on a généralement recours à l'utilisation de sonars, en particulier de sonars actifs. Dans ce contexte, le déploiement de sonars à partir de plateformes aériennes, hélicoptères ou drone, s'avère particulièrement efficace car de telles plateformes présentent une grande mobilité par rapport aux sous-marins.

Plus précisément, des hélicoptères sont utilisés pour mettre en oeuvre des émetteurs et récepteurs sonars reliés par un câble à leur plateforme, autrement dit à l'hélicoptère. On parle alors de "Sonars trempés". Par la suite, le sous-ensemble immergé et relié par le câble est appelé antenne. Il comprend les émetteurs et les récepteurs sonars proprement dits et éventuellement des équipements électroniques associés aux émetteurs et récepteurs. Il peut comprendre également des capteurs d'environnement.

De façon connue, la mise à l'eau depuis la plateforme, le contrôle en immersion ainsi que la récupération à bord de ces antennes sont effectués au moyen d'un treuil situé à l'intérieur de l'hélicoptère (comme divulgué par exemple dans US6233202B1 ou bien JPH04332894A). Il est également connu de US3237151 de s'affranchir du treuil situé à l'intérieur de l'hélicoptère en utilisant une antenne indépendante lancée de l'hélicoptère dans l'eau.

Lors de la descente et de la remontée de l'antenne au moyen du treuil, le câble génère une trainée importante dans l'eau. Cette trainée augmente avec la profondeur atteinte par l'antenne du fait de la longueur de câble déroulée. La vitesse de descente et de remontée de l'antenne est ainsi limitée par la trainée générée par le mouvement du câble. Plus la profondeur est importante, plus la vitesse doit être réduite à la descente car l'antenne n'est entrainée vers le fond que par son poids réduit de sa propre trainée et de celle du câble. A la remontée, le treuil doit exercer sur le câble un effort égal au poids de l'antenne augmenté de la trainée globale. Il serait possible de prévoir un treuil capable de supporter une trainée importante. Le câble doit être dimensionné pour résister à l'effort de traction exercé par le treuil. Plus cet effort est important plus la section du câble doit être augmentée ce qui tend encore à augmenter la trainée.

L'invention vise à rendre une opération de détection au moyen d'un sonar trempé indépendante de la trainée du câble. Par opération de détection, on entend la descente de l'antenne, la phase de détection acoustique proprement dite et la remontée de l'antenne.

A cet effet, l'invention a pour objet un sonar trempé comprenant une antenne équipée d'émetteurs et de récepteurs acoustiques. Le sonar trempé comprend en outre un treuil motorisé comportant un touret, un actionneur configuré pour faire tourner le touret et un câble enroulé sur le touret. Le treuil est disposé dans l'antenne et le câble permet d'accrocher l'antenne à un porteur à une extrémité libre du câble.

L'antenne peut comprendre des bras déployables sur lesquels sont disposés les récepteurs acoustiques, les bras déployables étant articulés par rapport à un boitier de l'antenne et un corps mobile en translation par rapport au boitier selon un axe principal du câble. Les bras sont alors articulés par rapport au corps. Dans une première position du corps, dans sa translation par rapport au boitier, les bras sont repliés contre le boitier et dans une seconde position du corps dans sa translation par rapport au boitier, les bras sont déployés.

L'antenne peut comprendre plusieurs anneaux portant chacun des émetteurs acoustiques, un corps mobile en translation par rapport au boitier selon un axe principal du câble. Les anneaux et le corps sont avantageusement reliés entre eux au moyen de liens extensibles. Dans une première position du corps dans sa translation par rapport au boitier, les anneaux et le corps sont au contact les uns des autres et dans une seconde position du corps dans sa translation par rapport au boitier, les anneaux et le corps sont distants les uns des autres.

Le corps est avantageusement muni d'une pince configurée pour pincer le câble, permettant, dans une position ouverte de la pince, au corps d'occuper sa première position et permettant, dans une position fermée de la pince, au corps d'occuper sa seconde position.

L'antenne comprend avantageusement une batterie et des moyens de recharge de la batterie ne transitant pas par le câble, la batterie permettant d'alimenter les émetteurs acoustiques et l'actionneur.

L'antenne comprend avantageusement au moins un convertisseur d'énergie permettant d'alimenter soit les émetteurs acoustiques soit l'actionneur.

Le convertisseur d'énergie est avantageusement bidirectionnel permettant soit à la batterie d'alimenter l'actionneur soit à l'actionneur de recharger la batterie.

L'invention sera mieux comprise et d'autres avantages apparaîtront à la lecture de la description détaillée d'un mode de réalisation donné à titre d'exemple, description illustrée par le dessin joint dans lequel :
les figures 1a et 1b représentent différents porteurs équipés chacun d'un sonar trempé ;
la figure 2 représente une première variante de réalisation d'une antenne du sonar trempé des figures 1a et 1b ;
les figures 3a et 3b représentent une deuxième variante de réalisation d'une antenne du sonar trempé des figures 1a et 1b ;
les figures 4a et 4b représentent une troisième variante de réalisation d'une antenne du sonar trempé des figures 1a et 1b ;
la figure 5 représente sous forme de schéma bloc un exemple d'architecture électrique d'une antenne du sonar trempé.

Par souci de clarté, les mêmes éléments porteront les mêmes repères dans les différentes figures.

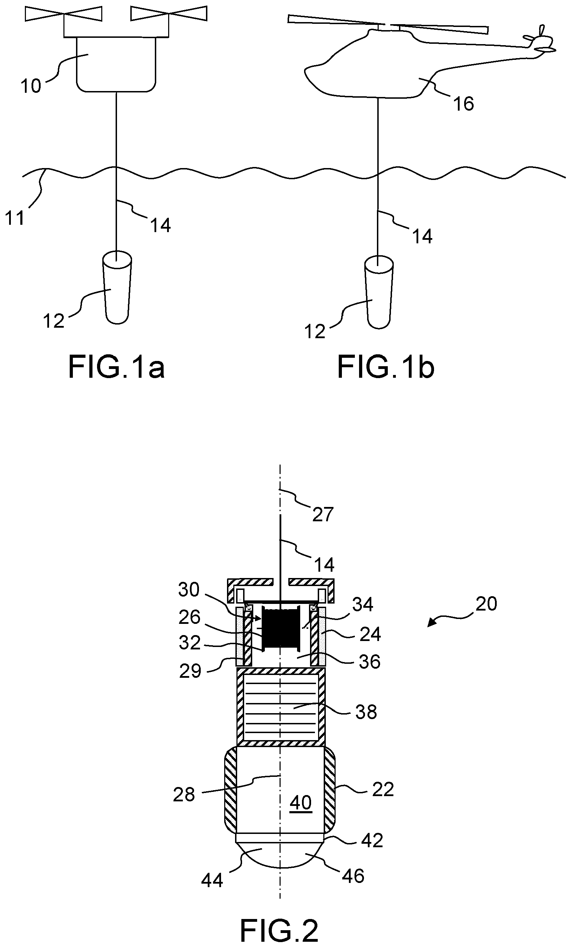

La figure 1a représente un drone 10 en vol stationnaire au-dessus de l'eau dont la surface porte le repère 11. Le drone 10 est équipé d'un sonar actif trempé comprenant une antenne 12 accrochée au drone 10 par un câble 14. Ce type de sonar permet notamment la détection et la classification d'objets sous-marins. La figure 1b représente un hélicoptère 16 également équipé d'un sonar actif trempé comprenant l'antenne 12 accrochée à l'hélicoptère 16 par le câble 14. De façon générale, dans le cadre de l'invention, tout type de porteur susceptible de se positionner au-dessus de l'eau peut être équipé d'un sonar actif trempé. Le porteur est apte à descendre l'antenne à une profondeur d'immersion souhaitée, à piloter la phase de détection acoustique et à remonter l'antenne afin de terminer sa mission ou afin de réaliser d'autres opérations de détection.

La figure 2 représente une première variante de réalisation d'antenne 20 d'un sonar actif trempé selon l'invention. L'antenne 20 est équipée d'émetteurs acoustiques 22, de récepteurs acoustiques 24 ainsi que d'un treuil motorisé 26. Le treuil 26 permet d'enrouler et de dérouler le câble 14. Une extrémité libre 27 du câble 14 permet d'accrocher l'antenne 20 au porteur tel que le drone 10 ou l'hélicoptère 16. L'antenne 20 s'étend selon un axe 28 qui est vertical lorsque l'antenne 20 est pendue par le câble 14 et n'est soumise qu'à la gravité. L'antenne 20 a une forme sensiblement de révolution autour de l'axe 28. Les émetteurs acoustiques 22 et les récepteurs acoustiques 24 sont disposés radialement autour de l'axe 28.

Les émetteurs acoustiques 22 et les récepteurs acoustiques 24 peuvent être fixés à un boitier 29 de l'antenne 20. Les émetteurs acoustiques 22 et les récepteurs acoustiques 24 peuvent être disposés dans des zones distinctes de l'antenne 20, les zones étant superposées l'une au-dessus de l'autre comme représenté sur la figure 2. Alternativement, les zones peuvent être imbriquées comme par exemple décrit dans la demande de brevet publiée sous le n° WO2015/092066 et déposée au nom de la demanderesse.

Le treuil 26 est motorisé au moyen d'un actionneur 30. Plus précisément, l'actionneur 30 permet de faire tourner un touret 32 sur lequel le câble 14 est enroulé. L'actionneur 30 peut être un moteur électrique, hydraulique ou de façon plus générale mettant en oeuvre toute forme d'énergie apte à fonctionner dans un espace confiné sans renouvellement d'air. Il est avantageusement situé à l'intérieur du touret 32 afin de libérer de l'espace dans l'antenne 20. Le câble 14, sur sa partie déroulée, s'étend selon l'axe vertical 28. L'antenne 20 pend sous l'effet de la gravité. Sur la figure 2, le touret 32 tourne autour d'un axe horizontal 34. Alternativement, le câble 14 peut s'enrouler autour d'un touret à axe vertical. Un mécanisme de trancannage permet de ranger le câble 14 sur le touret 32. Le mécanisme de trancannage assure une translation alternée d'un guide câble le long de l'axe du touret afin de ranger le câble 14 en couches successives sur le touret 32. Dans le cas d'un touret à axe vertical, le touret peut être fixe et le mécanisme de trancannage tourne alors autour du touret en complément de sa translation. De tels mécanismes existent notamment dans les moulinets de pêche. Alternativement, le touret peut tourner autour de son axe et le guide du mécanisme de trancannage ne se déplace qu'en translation par rapport à un boitier 29 de l'antenne 20.

Le treuil 26 formé du touret 32 et de l'actionneur 30 est disposé à l'intérieur de l'antenne 20, par exemple dans un volume interne 36 située entre les récepteurs acoustiques 24.

L'antenne 20 comprend également des modules électroniques 38 permettant notamment la génération des signaux acoustiques émis par les émetteurs 22, le traitement des signaux acoustiques reçus par les récepteurs 24 et le pilotage de l'actionneur 30.

L'énergie électrique nécessaire au fonctionnement de tous les composants de l'antenne 20 peut provenir du porteur et être véhiculée par le câble 14. Cependant cette solution nécessite d'augmenter la section du câble 14 pour être à même de véhiculer toute l'énergie nécessaire. En particulier, l'alimentation des émetteurs acoustiques nécessite une puissance instantanée importante qui peut être de l'ordre de plusieurs kilowatts. Le câble 14 pouvant dépasser plusieurs centaines de mètres de long, il est alors nécessaire de prévoir une section de câble suffisamment importante pour limiter les effets de pertes ohmiques le long du câble 14. Cela tend à augmenter les dimensions du touret 32 qui doit pouvoir accueillir le câble 14 dans la quasi-totalité de sa longueur. De plus, durant les phases d'émissions acoustiques, la transmission de données dans le câble doit être interrompue pour éviter toute perturbation des données lors de la transmission de puissance dans le câble 14.

Pour limiter les périodes de fort transfert de puissance dans le câble 14, il est avantageux que l'antenne 20 soit équipée d'une batterie 40 avantageusement disposée dans une partie basse de l'antenne 20 ou tout au moins sous le volume 36 contenant le treuil 26 afin de permettre à l'antenne de conserver une meilleure orientation verticale, notamment lors de la descente lorsqu'elle est pendue par le câble 14. La batterie 40 peut être destinée à lisser le transfert d'énergie électrique dans le câble 14, ce qui permet de réduire la section des conducteurs électriques du câble 14. A cet effet, la batterie 40 peut alimenter les émetteurs acoustiques 22 qui, habituellement émettent à forte puissance durant une faible fraction de la durée d'une mission. Il est également avantageux de se passer complètement de transfert d'énergie dans le câble 14. La batterie 40 alimente alors toutes les charges électriques de l'antenne, comme notamment le treuil 26, les modules électroniques 38, les émetteurs 22 et récepteurs acoustiques 24. Pour le rechargement de la batterie 40, l'antenne comprend des moyens de rechargement indépendants du câble 14, comme par exemple un connecteur spécifique ou une zone de rechargement sans contact 42, par exemple par induction. Le rechargement de la batterie 40 peut se faire à bord du porteur 10 ou 16 en raccordant le connecteur spécifique ou en plaçant la zone 42 à proximité d'un inducteur dédié.

L'antenne 20 peut également comprendre des capteurs d'environnement comme un sondeur 44 permettant de déterminer la distance de l'antenne 20 au fond et un capteur de température 46 permettant de mesurer l'évolution de la température de l'eau en fonction de la profondeur atteinte par l'antenne 20. En effet, la propagation des ondes sonores dans l'eau est fonction de l'évolution de la température de l'eau. Ces capteurs peuvent également être alimentés par la batterie 40.

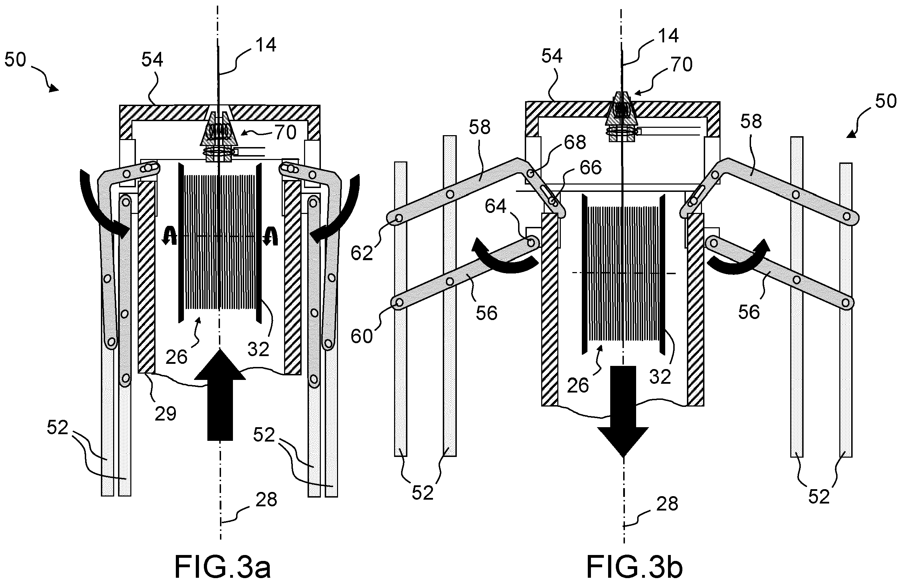

Les figures 3a et 3b représentent une deuxième variante de réalisation d'antenne 50 d'un sonar actif trempé selon l'invention. Dans cette variante lors de la réception sonar, les récepteurs acoustiques 24, éventuellement placés sur des bras, sont déployés à distance du boitier 29 de l'antenne 50. Par contre lors de la manoeuvre du treuil 26, les récepteurs acoustiques 24 sont rangés contre le boitier 29 afin de limiter la trainée de l'antenne 50 lors de la descente et de la remontée de l'antenne 50 dans l'eau. Ce type d'antenne déployable a été développé dans le passé par la demanderesse. Dans ce type d'antenne le déploiement des récepteurs acoustiques est réalisé au moyen d'un mécanisme électromécanique placé dans l'antenne. Ce mécanisme comprend un moteur électrique déplaçant des bras supportant les récepteurs acoustiques. Le moteur est actionné aussi bien lors du déploiement que lors du repliement des bras. Ce mécanisme est lourd et encombrant.

Dans le cadre général de l'invention, il est possible de conserver dans l'antenne un tel mécanisme électromécanique de manoeuvre de bras supportant les récepteurs acoustiques 24. Alternativement, la seconde variante permet de se passer de ce mécanisme.

L'antenne 50 comprend des bras 52 déployables sur lesquels sont disposés les récepteurs acoustiques 24. Les bras 52 sont avantageusement répartis de façon régulière autour de l'axe 28 afin d'assurer une détection acoustique complète autour de l'axe 28. La figure 3a représente partiellement l'antenne 50 dans laquelle les bras 52 sont repliés contre le boitier 29. La figure 3b représente également partiellement l'antenne 50 dans laquelle les bras 52 sont déployés à distance du boitier 29. Les bras 52 sont articulés par rapport au boitier 29 et par rapport à un corps 54 formant un couvercle en forme de rondelle et mobile en translation par rapport au boitier 29 selon l'axe 28. Le corps 54 est par exemple de révolution autour de l'axe 28 et le câble 14 traverse le corps 54 par le trou de la rondelle.

Cette double articulation permet aux bras 52 de s'écarter ou de se rapprocher du boitier 29 lors de déplacement du corps 54. Plus précisément, dans la position du corps 54 représentée sur la figure 3a, les bras 52 sont repliés contre le boitier 29 et dans la position du corps 54 représentée sur la figure 3b, les bras 52 sont déployés à distance du boitier 29.

Les bras 52 peuvent être articulés directement sur le boitier 29 et sur le corps 54 au moyen de liaisons pivot. Une fois déployés, les bras 52 s'étendent de façon horizontale ou inclinée par rapport à l'axe 28. La cinématique de ce type de mécanisme est très simple. Elle est notamment employée dans des bouées sonar où le porteur flotte à la surface de l'eau. Cependant cette orientation des bras peut dégrader la détection acoustique lorsque le porteur est un drone ou un hélicoptère. En effet, dans cette orientation, les récepteurs acoustiques 24 sont perturbés par le bruit généré par le porteur. Il peut donc être préférable de prévoir une orientation verticale des bras 52 lorsqu'ils sont déployés. Autrement dit, il peut être souhaitable de conserver les bras parallèles à l'axe 28 lors de la translation du corps 54. Pour ce faire, les bras 52 peuvent être articulés par l'intermédiaire d'un parallélogramme déformable. Plus précisément, deux barres 56 et 58 possédant des tronçons parallèles sont articulées d'une part sur un bras 52, respectivement au moyen des liaisons 60 et 62, et d'autre part sur le boitier 29, respectivement au moyen des liaisons 64 et 66. Une des barres, la barre 58 dans l'exemple représenté, est articulée au corps 54 au moyen de la liaison 68 en un point distant de son articulation au bras 52 et de son articulation au boitier 29. Ainsi, lorsque le corps 54 se déplace en translation, la barre 58 pivote autour de son articulation au boitier 29 et entraine le bras 52. La barre 56 est entrainée par le bras 52 et pivote également par rapport au boitier 29. Lors de ce déplacement, l'orientation du bras 52 par rapport au boitier 29 ne varie pas. Dans l'exemple représenté, le bras 52 reste parallèle à l'axe 29. Comme représenté, il est possible d'articuler plusieurs bras 52, deux dans l'exemple représenté, aux deux mêmes barres 56 et 58. Plus précisément, chacun des deux bras 52 est articulé à la barre 58 et à la barre 56. Comme précisé plus haut, l'antenne 50 peut être équipée de plusieurs bras 52 répartis autour de l'axe 28. Pour supporter ces différents bras 52, plusieurs séries de deux barres 56 et 58 réparties elles aussi de façon radiale autour de l'axe 28 équipent l'antenne 50.

Le déplacement du corps 54 en translation par rapport au boitier 29 peut être réalisé au moyen d'un actionneur électromécanique assurant directement ce déplacement. L'actionneur est par exemple formé d'un vérin linéaire dont le corps est fixé au boitier 29 et dont la tige, se déplaçant en translation par rapport au corps du vérin, est fixée au corps 54. Le montage inverse est également possible.

Avantageusement, il est possible de se passer d'actionneur entre le boitier 29 et le corps 54 en utilisant les forces de gravité s'exerçant sur le boitier 29 et sur le corps 54. En effet, le boitier 29 peut contenir des composants lourds qui peuvent être mis à profit pour le déploiement des bras 52. Pour ce faire, le corps 54 est muni d'une pince 70 configurée pour pincer le câble 14 et l'immobiliser par rapport au corps 54. La pince 70 peut être manoeuvrée par un actionneur électromécanique. Cet actionneur lié au corps 54 consomme nettement moins d'énergie qu'un actionneur assurant directement le déplacement du corps 54 par rapport au boitier 29.

En position ouverte de la pince 70, le câble 14 est libre par rapport au corps 54 et son poids, associé à celui des bras 52 par l'intermédiaire de l'articulation 68, entraine le corps 54 vers le bas, c'est-à-dire vers le boitier 29. Dans cette position, les bras 52 sont également entrainés vers le bas, c'est-à-dire en position repliée contre le boitier 29. Cette position, pince ouverte, est représentée sur la figure 3a.

En position fermée de la pince 70 le câble 14 est immobilisé par rapport au corps 54. Dans cette position, il est possible de manoeuvrer le treuil 26 de façon à dérouler le câble et ainsi permettre au boitier 29 et aux équipements qui lui sont fixé de descendre par rapport au corps 54 sous l'effet de la gravité. Ce mouvement relatif du corps 54 par rapport au boitier 29 entraine le déploiement des bras 52 pour atteindre la position de la figure 3b. Ceci est possible si les bras 52, et le cas échéant les barres 56 et 58, sont plus légers que le boitier 29 et tous les composants qui lui sont fixés. Cette condition est généralement facilement respectée du fait de la présence de composants lourds dans le boitier 29, notamment la batterie 40 et le treuil 26. La manoeuvre du treuil 26 pour dérouler le câble 14 après la fermeture de la pince 70 se fait de manière coordonnée avec le déplacement relatif du corps 54 par rapport au boitier 29. Plus précisément, la longueur de câble déroulée est sensiblement égale à la longueur de la translation du corps 54 par rapport au boitier 29. Dérouler une plus grande longueur de câble risquerait d'entrainer la présence câble mou entre le touret 32 et la pince 70. Dérouler une plus faible longueur de câble ne permet pas de déployer complètement les bras 52. Il est possible de contrôler le déploiement des bras 52 par la manoeuvre du treuil 26.

La pince 70 comprend une partie fixe solidaire du corps 54 et une partie mobile par rapport à la partie fixe et venant au contact du câble 14. La partie fixe de la pince 70 peut être solidaire du corps 54 ou éventuellement flottante. Plus précisément, en position ouverte de la pince 70, la partie fixe peut conserver au moins un degré de liberté en translation selon l'axe 28 par rapport au corps 54. Ce degré de liberté facilite la fermeture de la pince 70 lorsque l'antenne 50 est en descente ou en remontée. Ce degré de liberté permet de limiter le frottement de la partie mobile sur le câble 14 lors de la fermeture de la pince 70.

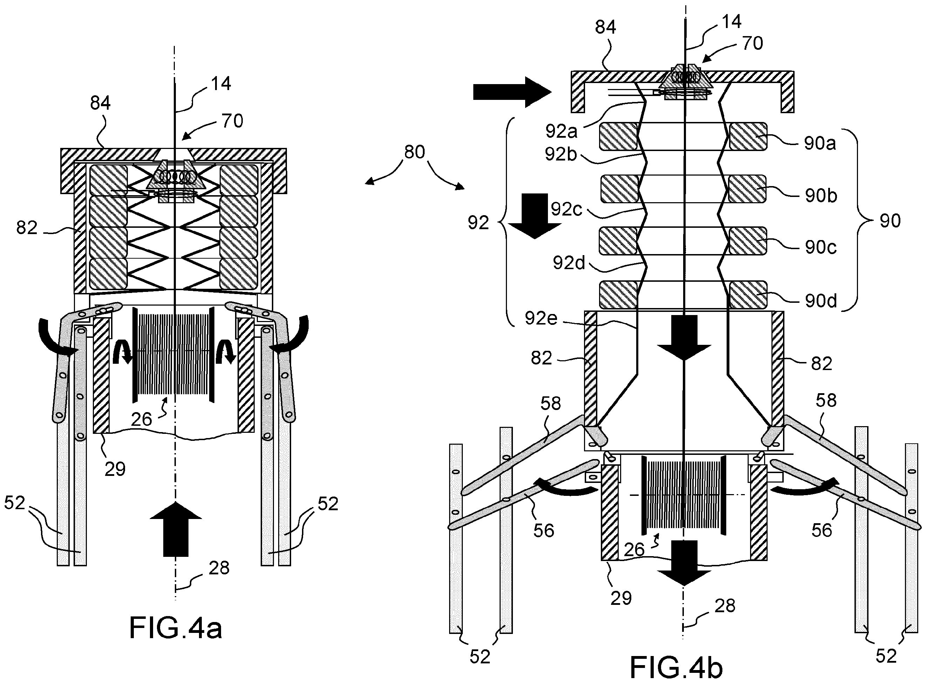

les figures 4a et 4b représentent une troisième variante de réalisation d'antenne 80 d'un sonar actif trempé selon l'invention. Dans cette variante, on retrouve le boitier 29 dans lequel est situé le treuil 26, les bras 52 articulés sur le boitier 29 par l'intermédiaire des barres 56 et 58. Comme pour la figure 3a, la figure 4a représente les bras 52 en position repliée contre le boitier 29. De même, comme pour la figure 3b, la figure 4b représente les bras 52 en position déployée.

A la différence de la deuxième variante, l'antenne 80 de la troisième variante comprend un corps réalisé en deux parties, une partie inférieure formant un tube 82 autour de l'axe 28 et mobile en translation par rapport au boitier 29 selon l'axe 28 et une partie supérieure formant un couvercle 84 en forme de rondelle semblable au corps 54. Le câble 14 traverse le couvercle 84 également par le trou de la rondelle. La barre 58 est articulée au tube 82 au moyen de la liaison 68 en un point distant de son articulation au bras 52 et de son articulation au boitier 29. Ainsi, lorsque le tube 82 se déplace en translation, la barre 58 pivote autour de son articulation au boitier 29 et entraine le bras 52.

Le couvercle 84 est mobile en translation par rapport au tube 82 selon l'axe 28. Le couvercle 84 est relié au tube 82 au moyen d'un lien extensible. L'antenne 80 comprend également la pince 70. Comme dans la deuxième variante, la pince 70 de l'antenne 80 est configurée pour pincer le câble 14 et ainsi donner la possibilité d'immobiliser le câble 14 par rapport au couvercle 84 lorsque la pince est fermée. Dans la position de la figure 4a, la pince 70 est ouverte et le couvercle 84 est posé sur le tube 82 qui est posé à son tour sur le boitier 29. Le couvercle 84 et le tube 82 sont entrainés par la gravité. Dans la position de la figure 4b, la pince 70 est fermée et la gravité entraine le boitier 29 vers le bas et maintient le couvercle 84 à distance du tube et le tube 82 à distance du boitier 29.

Dans l'antenne 20, les émetteurs acoustiques 22 sont fixés au boitier 29. Les émetteurs occupent une hauteur prédéfinie le long de l'axe 28. Il peut être avantageux d'augmenter cette hauteur, notamment pour écarter verticalement les émetteurs les uns des autres. Cependant, un tel écart tend également à augmenter la hauteur de l'antenne 20 selon son axe 28. L'antenne 80 propose une alternative permettant de maintenir entre les émetteurs acoustiques une hauteur donnée durant la descente et la remontée de l'antenne et d'étendre cette hauteur lors de la phase de détection. Autrement dit l'antenne 80 est configurée pour permettre le déploiement des émetteurs selon l'axe 28 durant la phase de détection.

A cet effet, l'antenne 80 comprend plusieurs anneaux 90 portant chacun des émetteurs acoustiques 22. Les anneaux 90 peuvent coulisser le long de l'axe 28 entre le boitier 29 et le couvercle 84. Les anneaux 90 sont reliés entre eux au moyen de liens extensibles 92 selon l'axe 28. Ainsi, dans la position de la figure 4a, lorsque l'antenne 80 descend ou remonte vers le porteur, les anneaux 90 sont au contact les uns des autres, rangés à l'intérieur du tube 82. De plus, les bras 52 sont repliés comme sur la figure 3a. Dans cette position l'antenne 80 occupe un volume compact générant une trainée minimale lors de la descente ou de la remontée de l'antenne 80. Dans la position de la figure 4b, les bras 52 sont déployés comme sur la figure 3b et les anneaux 90 sont également déployés. Plus précisément, les anneaux 90 sont distants les uns des autres. Les anneaux 90 sont également distants du couvercle 84 et du tube 82.

Dans l'exemple représenté sur les figures 4a et 4b, l'antenne 80 comprend quatre anneaux 90. Sur les figures 4a et 4b les anneaux 90 sont différenciés et portent les repères 90a, 90b, 90c et 90d. De même les liens extensibles 92 sont différenciés et portent les repères 92a, 92b, 92c, 92d et 92e.Il est bien entendu que l'invention peut être mise en oeuvre quel que soit le nombre d'anneaux 90 avec un nombre de liens extensible correspondant. Plus précisément, un lien extensible 92a relie le couvercle 84 à l'anneau 90a. Un lien extensible 92b relie l'anneau 90a à l'anneau 90b. Un lien extensible 92c relie l'anneau 90b à l'anneau 90c. Un lien extensible 92d relie l'anneau 90c à l'anneau 90d et un lien extensible 92e relie l'anneau 90d au tube 82. Dans la configuration de la figure 4a les liens extensibles 92a à 92e sont détendus et permettent le positionnement des anneaux 90a à 90d les uns en contact avec les autres. Dans la configuration de la figure 4b les liens extensibles 92a à 92e sont tendus et permettent le positionnement des anneaux 90a à 90d écartés les uns des autres et écartés du couvercle 84 et du tube 82. Les liens extensibles 92a à 92e sont par exemple réalisées au moyen de sangles qui en position tendues déterminent l'espacement des anneaux entre eux et par rapport au couvercle 84 et au tube 82. Dans la position de la figure 4a, les sangles sont simplement détendues et se rangent à l'intérieur des anneaux.

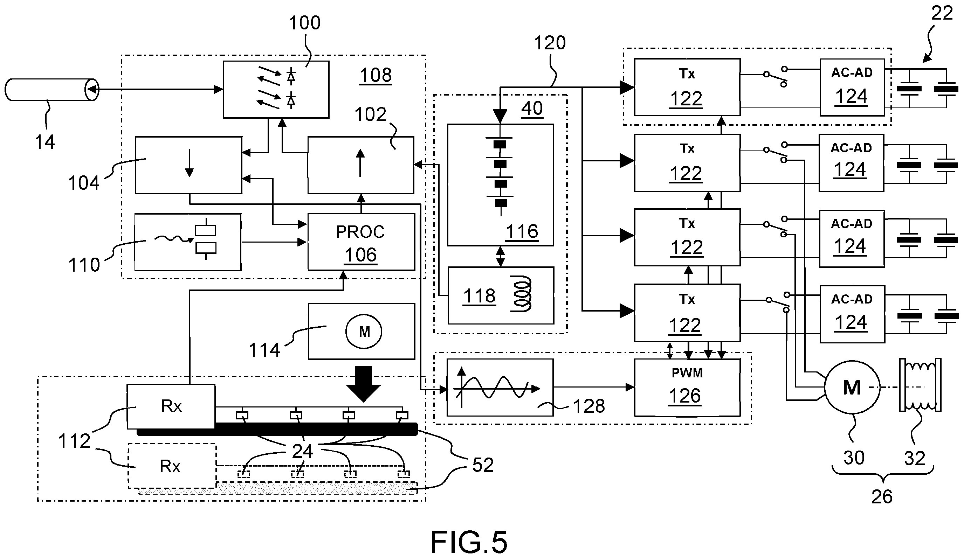

La figure 5 représente sous forme de schéma bloc un exemple d'architecture électrique pouvant être mis en oeuvre dans toutes les antennes décrites précédemment. Dans cet exemple, la batterie 40 fournit toute l'énergie nécessaire aux différentes charges électriques de l'antenne. L'antenne est reliée au porteur au moyen du câble 14 qui, dans cet exemple, ne véhicule que des informations par exemple au moyen d'une fibre optique. Dans l'antenne, la fibre optique est reliée à un module interface 100 permettant de transformer les signaux optiques véhiculés dans la fibre optique en signaux électriques. Le module interface 100 est lui-même relié à un module interface montant 102 assurant la mise en forme de signaux électriques internes à l'antenne en direction du module interface 100. Le module interface 100 est également relié à un module interface descendant 104 assurant la mise en forme de signaux électriques reçus du module interface 100. Les deux modules 102 et 104 sont gérés par un processeur 106. Une carte de circuit imprimé 108 peut porter les modules interfaces 100, 102 et 104 ainsi que le processeur 106. La carte de circuit imprimé 108 peut également porter les capteurs d'environnement ou tout au moins un module d'interface 110 permettant de les piloter et de récupérer les informations que les capteurs délivrent.

On retrouve plusieurs bras 52 portant chacun des récepteurs acoustiques 24. Un module de réception Rx 112 associé à chaque bras 52 permet de mettre en forme les signaux acoustiques reçus des récepteurs acoustiques 24. Le module de réception Rx 112 est relié au processeur 106 pour lui transmettre les signaux mis en forme. Un actionneur 114, commandé par le processeur 106, permet le déploiement des bras 52. L'actionneur 114 peut manoeuvrer directement les bras 52 ou manoeuvrer l'ouverture et la fermeture de la pince 70.

La batterie 40 comprend des cellules 116 pouvant accumuler ou délivrer l'énergie électrique ainsi qu'un module de gestion 118 assurant la supervision de l'état de charge des cellules 100. Le module de gestion 118 peut également comprendre les moyens de rechargement indépendants du câble 14, représentés ici sous forme d'un enroulement induit permettant le rechargement des cellules 116 sans contact lorsque le câble 14 est enroulé et que l'antenne est disposée dans le porteur.

Sur la figure 5, un réseau continu haute tension 120 est connecté à la batterie 40. Le réseau 120 permet d'alimenter principalement les émetteurs acoustiques 22 par l'intermédiaire de convertisseurs Tx 122 et en cas de besoin au travers d'adaptateurs 124 permettant l'adaptation d'impédance avec les émetteurs acoustiques 22. L'antenne dispose par exemple d'autant de convertisseurs Tx que d'anneaux 90. D'autres réseaux, notamment basse tension, peuvent également être présents dans l'antenne, notamment pour alimenter le circuit imprimé 108 et d'autres charges électriques ne nécessitant pas de haute tension. Pour ne pas surcharger la figure 5, ces autres réseaux ne sont pas représentés. Les convertisseurs Tx 122 ne sont utilisés que durant de faibles durées et il est avantageux d'en mutualiser l'utilisation avec d'autres charges. Plus précisément, les émissions acoustiques n'ont lieu que durant la phase de détection acoustique pendant laquelle le treuil 26 est à l'arrêt. Inversement, lorsque l'antenne descend ou remonte sous l'action du treuil 26, il n'y a ni émission, ni réception acoustique. Il est donc possible d'utiliser les convertisseurs Tx 122 en dehors de la phase de détection acoustique, notamment pour alimenter le treuil 26 et plus précisément son moteur électrique 30.

Les convertisseurs Tx 122 sont par exemple des onduleurs convertissant la tension continue du réseau 120 en tension alternative soit à la fréquence des ondes acoustiques que l'on souhaite émettre dans l'eau, soit à une fréquence compatible avec la vitesse de rotation du moteur électrique 30. Un onduleur est particulièrement bien adapté pour générer une fréquence variable permettant de faire varier de façon continue la vitesse du moteur électrique 30. Les convertisseurs sont par exemple pilotés par un modulateur de largeur d'impulsions PWM 126 pilotant notamment l'ouverture et la fermeture d'interrupteurs électroniques appartenant aux différents convertisseurs Tx 122. Le modulateur de largeur d'impulsions PWM 126 peut recevoir une commande d'un module de pilotage 128. La commande est par exemple une image du signal alternatif délivré soit au moteur électrique 30, soit aux récepteurs acoustiques 24.

Les convertisseurs Tx 122 peuvent être monodirectionnels. Autrement dit, les convertisseurs Tx 122 ne permettent que d'alimenter les charges qui leur sont attribuées. Par ailleurs, lors de la descente de l'antenne, le moteur électrique 30 peut régénérer de l'énergie électrique qu'il est alors nécessaire de dissiper, par exemple dans une résistance électrique. Alternativement, il est possible de prévoir des convertisseurs Tx 122 bidirectionnels permettant de recharger la batterie 40 lorsqu'une charge régénératrice lui est raccordée, notamment le moteur électrique 30 lors de la descente. En complément du rechargement possible de la batterie 40 par le moteur électrique 30 fonctionnant en générateur, il est utile de prévoir une résistance permettant de dissiper la puissance régénérée lorsque la charge maximale de la batterie 40 est atteinte.

## Revendications

1. Sonar trempé comprenant une antenne (20 ; 50 ; 80) équipée d'émetteurs (22) et de récepteurs (24) acoustiques, **caractérisé en ce qu'**il comprend en outre un treuil (26) motorisé comportant un touret (32), un actionneur (30) configuré pour faire tourner le touret (32) et un câble (14) enroulé sur le touret (32), **en ce que** le treuil (26) est disposé dans l'antenne (20), et **en ce que** le câble (14) permet d'accrocher l'antenne (20) à un porteur (10, 16) à une extrémité libre du câble (14).

2. Sonar trempé selon la revendication 1, **caractérisé en ce que** l'antenne (50 ; 80) comprend des bras (52) déployables sur lesquels sont disposés les récepteurs acoustiques (24), les bras (52) déployables étant articulés par rapport à un boitier (29) de l'antenne (50) et un corps (54 ; 82, 84) mobile en translation par rapport au boitier (29) selon un axe (28) principal du câble (14), **en ce que** les bras (52) sont articulés par rapport au corps (54 ; 82, 84), **en ce que** dans une première position du corps (54 ; 82, 84) dans sa translation par rapport au boitier (29), les bras (52) sont repliés contre le boitier (29) et **en ce que** dans une seconde position du corps (54 ; 82, 84) dans sa translation par rapport au boitier (29), les bras (52) sont déployés.

3. Sonar trempé selon l'une des revendications précédentes, **caractérisé en ce que** l'antenne (80) comprend plusieurs anneaux (90) portant chacun des émetteurs acoustiques (22), un corps (82, 84) mobile en translation par rapport au boitier (29) selon un axe (28) principal du câble (14), **en ce que** les anneaux (90) et le corps (82, 84) sont reliés entre eux au moyen de liens extensibles (92), **en ce que** dans une première position du corps (82, 84) dans sa translation par rapport au boitier (29), les anneaux (90) et le corps (82, 84) sont au contact les uns des autres et **en ce que** dans une seconde position du corps (82, 84) dans sa translation par rapport au boitier (29), les anneaux (90) et le corps (82, 84) sont distants les uns des autres.

4. Sonar trempé selon l'une des revendications 2 ou 3, **caractérisé en ce que** le corps (54 ; 82, 84) est muni d'une pince (70) configurée pour pincer le câble (14), permettant, dans une position ouverte de la pince (70), au corps (54 ; 82, 84) d'occuper sa première position et permettant, dans une position fermée de la pince (70), au corps (54 ; 82, 84) d'occuper sa seconde position.

5. Sonar trempé selon l'une des revendications précédentes, **caractérisé en ce que** l'antenne (20 ; 50 ; 80) comprend une batterie (40) et des moyens de recharge de la batterie (118) ne transitant pas par le câble (14), la batterie (40) permettant d'alimenter les émetteurs acoustiques (22) et l'actionneur (30).

6. Sonar trempé selon la revendication 5, **caractérisé en ce que** l'antenne comprend au moins un convertisseur d'énergie (122) permettant d'alimenter soit les émetteurs acoustiques (22) soit l'actionneur (30).

7. Sonar trempé selon la revendication 6, **caractérisé en ce que** le convertisseur d'énergie (122) est bidirectionnel permettant soit à la batterie (40) d'alimenter l'actionneur (30) soit à l'actionneur (30) de recharger la batterie (40).

## Patentansprüche

1. Tauchsonar, das eine Antenne (20; 50; 80) umfasst, die mit akustischen Sendern (22) und Empfängern (24) ausgestattet ist, **dadurch gekennzeichnet, dass** es ferner eine motorisierte Winde (26) umfasst, die eine Trommel (32), einen zum Drehen der Trommel (32) konfigurierten Aktuator (30) und ein auf die Trommel (32) gewickeltes Kabel (14) aufweist, dadurch, dass die Winde (26) in der Antenne (20) angeordnet ist, und dadurch, dass das Kabel (14) es zulässt, die Antenne (20) an einem Träger (10, 16) an einem freien Ende des Kabels (14) zu befestigen.

2. Tauchsonar nach Anspruch 1, **dadurch gekennzeichnet, dass** die Antenne (50; 80) ausklappbare Arme (52) umfasst, auf denen die akustischen Empfänger (24) angeordnet sind, wobei die ausklappbaren Arme (52) in Bezug auf ein Gehäuse (29) der Antenne (50) und einen in Bezug auf das Gehäuse (29) entlang einer Hauptachse (28) des Kabels (14) translatorisch beweglichen Körper (54; 82, 84) gelenkig sind, dadurch, dass die Arme (52) in Bezug auf den Körper (54; 82, 84) gelenkig sind, dadurch, dass in einer ersten Position des Körpers (54; 82, 84) bei seiner Translation relativ zum Gehäuse (29) die Arme (52) gegen das Gehäuse (29) gefaltet sind, und dadurch, dass in einer zweiten Position des Körpers (54; 82, 84) bei seiner Translation in Bezug auf das Gehäuse (29) die Arme (52) ausgeklappt sind.

3. Tauchsonar nach einem der vorhergehenden Ansprüche, **dadurch gekennzeichnet, dass** die Antenne (80) mehrere Ringe (90) umfasst, die jeweils akustische Sender (22) tragen, einen in Bezug auf das Gehäuse (29) entlang einer Hauptachse (28) des Kabels (14) translatorisch beweglichen Körper (82, 84), dadurch, dass die Ringe (90) und der Körper (82, 84) mittels dehnbarer Verbindungen (92) miteinander verbunden sind, dadurch, dass in einer ersten Position des Körpers (82, 84) bei seiner Translation in Bezug auf das Gehäuse (29) die Ringe (90) und der Körper (82, 84) miteinander in Kontakt sind, und dadurch, dass in einer zweiten Position des Körpers (82, 84) bei seiner Translation in Bezug auf das Gehäuse (29) die Ringe (90) und der Körper (82, 84) voneinander beabstandet sind.

4. Tauchsonar nach einem der Ansprüche 2 oder 3, **dadurch gekennzeichnet, dass** der Körper (54; 82, 84) mit einer Klemme (70) versehen ist, die zum Einklemmen des Kabels (14) konfiguriert ist, so dass in einer offenen Position der Klemme (70) der Körper (54; 82, 84) seine erste Position einnehmen kann und in einer geschlossenen Position der Klemme (70) der Körper (54; 82, 84) seine zweite Position einnehmen kann.

5. Tauchsonar nach einem der vorhergehenden Ansprüche, **dadurch gekennzeichnet, dass** die Antenne (20; 50; 80) eine Batterie (40) und nicht über das Kabel (14) laufende Mittel zum Aufladen der Batterie (118) umfasst, wobei es die Batterie (40) ermöglicht, die akustischen Sender (22) und den Aktuator (30) mit Strom zu versorgen.

6. Tauchsonar nach Anspruch 5, **dadurch gekennzeichnet, dass** die Antenne mindestens einen Energiewandler (122) umfasst, der es zulässt, entweder die akustischen Sender (22) oder den Aktuator (30) mit Strom zu versorgen.

7. Tauchsonar nach Anspruch 6, **dadurch gekennzeichnet, dass** der Energiewandler (122) bidirektional ist, so dass entweder die Batterie (40) den Aktuator (30) versorgen kann oder der Aktuator (30) die Batterie (40) aufladen kann.

## Claims

1. A dipping sonar comprising an antenna (20; 50; 80) equipped with acoustic transmitters (22) and receivers (24), **characterised in that** it further comprises a motorised winch (26) having a reel (32), an actuator (30) configured to turn the reel (32) and a cable (14) wound around the reel (32), **in that** the winch (26) is disposed in the antenna (20), and **in that** the cable (14) enables the antenna (20) to be hooked onto a holder (10, 16) at a free end of the cable (14).

2. The dipping sonar according to claim 1, **characterised in that** the antenna (50; 80) comprises deployable arms (52) upon which the acoustic receivers (24) are disposed, the deployable arms (52) being articulated relative to a case (29) of the antenna (50) and a body (54; 82, 84) mobile in translation relative to the case (29) along a main axis (28) of the cable (14), **in that** the arms (52) are articulated relative to the body (54; 82, 84), **in that** in a first position of the body (54; 82, 84) in its translation relative to the case (29), the arms (52) are folded against the case (29) and **in that** in a second position of the body (54; 82, 84) in its translation relative to the case (29), the arms (52) are deployed.

3. The dipping sonar according to one of the previous claims, **characterised in that** the antenna (80) comprises several rings (90) each carrying acoustic transmitters (22), a body (82, 84) mobile in translation relative to the case (29) along a main axis (28) of the cable (14), **in that** the rings (90) and the body (82, 84) are connected to each other by means of extendable links (92), **in that** in a first position of the body (82, 84) in its translation relative to the case (29), the rings (90) and the body (82, 84) are in contact with each other and **in that** in a second position of the body (82, 84) in its translation relative to the case (29), the rings (90) and the body (82, 84) are distant from each other.

4. The dipping sonar according to one of claims 2 or 3, **characterised in that** the body (54; 82, 84) is provided with a clamp (70) configured for clamping the cable (14), allowing, in an open position of the clamp (70), for the body (54; 82, 84) to occupy its first position and allowing, in a closed position of the clamp (70), for the body (54; 82, 84) to occupy its second position.

5. The dipping sonar according to one of the previous claims, **characterised in that** the antenna (20; 50; 80) comprises a battery (40) and means for recharging the battery (118) that do not pass through the cable (14), the battery (40) allowing for energy supply to the acoustic transmitters (22) and the actuator (30).

6. The dipping sonar according to claim 5, **characterised in that** the antenna comprises at least one energy converter (122) allowing for energy supply to either the acoustic transmitters (22) or the actuator (30).

7. The dipping sonar according to claim 6, **characterised in that** the energy converter (122) is bi-directional allowing either the battery (40) to supply energy to the actuator (30) or the actuator (30) to recharge the battery (40).
